# EUROPEAN PATENT APPLICATION

(11) **EP 3 467 330 A1**
(43) Date of publication of application: **10.04.2019**
(21) Application number: 18197838.8
(22) Date of filing: 01.10.2018
(51) Int. Cl.: F16C 33/78, F16J 15/3252, F16J 15/3264

(54) **ROTARY SEAL**

(30) Priority: 04.10.2017 JP 2017194086
(71) Applicant: Nakanishi Metal Works Co., Ltd., Kita-ku Osaka-shi Osaka 530-8566 (JP)
(72) Inventor: SATO, Takahiko, Osaka, 530-8566 (JP); AKASHI, Shinichi, Osaka, 530-8566 (JP); IIZAWA, Yusuke, Osaka, 530-8566 (JP)
(74) Representative: Betten & Resch

(57) **Abstract**

A plated coating of metal having a higher ionization tendency than iron is provided on at least either one of: (i) a metal fitting portion between a sleeve (2A) of a stainless steel-made slinger (2) of a rotary seal (1A) and an inner ring (12) that is a steel-made radially inner member; and (ii) an outside air side surface of the slinger (2), which includes an outside air side end portion of the metal fitting portion (A). Even when the solution containing the electrolyte is present on an outside air side of the fitting portion (A), the plated coating of metal having a higher ionization tendency than iron corrodes first instead of the inner ring (12) that is a steel-made member. Without lowering durability and reliability, a progress of corrosion of a steel-made member is delayed even when a solution containing an electrolyte is present around a contact portion between a stainless steel-made member and a steel-made member.

## Description

### BACKGROUND OF THE INVENTION

### (1) Field of the Invention

The present invention relates to a rotary seal having a metal fitting portion between the rotary seal itself and a member to which the rotary seal is to be attached, the rotary seal being for use in a transport machine, a general machine or the like.

### (2) Description of Related Art

As a rotary seal for use in a bearing device or the like for supporting a wheel of an automobile, there is a rotary seal, which includes a slinger including a sleeve and a flange extending from one end of the sleeve, and is used with the sleeve attached to a rotating-side member (see, for example, the bearing seal 11 of Patent Literature 1).

Such a rotary seal is given air tightness (resistance to water penetration) by a metal fitting portion made of the sleeve (see, for example, the cylindrical portion 14a of Patent Literature 1) of the metallic slinger and the metallic rotating-side member (for example, the inner ring member 6 of the inner ring 7 of Patent Literature 1).

In the bearing seal 11 of Patent Literature 1, an elastic seal member that is an elastic annular seal portion 14d obtained by applying and curing an elastomer agent is formed integrally with a region located at a corner portion on a rear end portion in a fitting direction when the cylindrical portion 14a of the slinger 14 is fitted. In this way, the air tightness at such a metal fitting portion is maintained. Then, the elastic seal member prevents muddy water or the like from penetrating the fitting portion, thereby suppressing rusting of the metal fitting portion described above.

### CITATION LIST

Patent Literature

Patent Literature 1: Japanese Patent No. 5430026

### SUMMARY OF THE INVENTION

In a configuration of the rotary seal made by forming the elastic seal member integrally with such a region located at the corner portion of the rear end portion in the fitting direction when the cylindrical portion 14a of the slinger 14 as in Patent Literature 1 is fitted, the elastic seal member being the elastic annular seal portion 14d obtained by applying and curing the elastomer agent, the elastic seal member prevents the penetration of muddy water or the like into the metal fitting portion, thus making it possible to suppress the rusting of such a fitting portion as described above. Therefore, a life of the bearing device can be lengthened.

However, in the elastic seal member obtained by applying and curing the elastomer agent, when the elastomer agent is discharged and applied by a dispenser or the like, a joint is made between a start point and end point of the elastomer agent. This part may be less durable.

In addition, when a part of the elastic seal member is broken by an external impact due to scattering of pebbles or the like, the elastic seal member may allow penetration of water from a gap made in such a broken portion.

Furthermore, since the elastic seal member is exposed to muddy water or the like and is used in a hot environment, the elastic seal member is anticipated to deteriorate.

In a configuration of a rotary seal with no provision of the elastic seal member, the rusting of the metal fitting portion is promoted particularly when a solution containing an electrolyte is present around a contact portion between a stainless steel-made slinger and a steel-made inner ring, that is, for example when muddy water or the like, which contains an antifreezing agent such as calcium chloride and sodium chloride, is present around the contact portion in a cold district. That is, when the stainless steel-made slinger and the steel-made inner ring are fitted to each other, since both of the slinger and the inner ring have different ionization tendencies, and stainless steel has a smaller ionization tendency than iron, the steel-made inner ring having a large ionization tendency becomes a negative electrode (anode), and the inner ring ionizes into the solution and melts out. As a result, corrosion of the inner ring progresses.

If this state continues, then a problem arises that the steel-made inner ring intensively corrodes and the air tightness of the fitting portion between the slinger and the inner ring deteriorates, and the life of the bearing device is shortened.

The present invention has been made in view of the above circumstances and problem. It is an object of the present invention to provide a rotary seal capable of delaying the progress of the corrosion of the steel-made member even when the solution containing the electrolyte is present around the contact portion between the stainless steel-made member and the steel-made member without lowering the durability and the reliability unlike the configuration of providing the elastic seal member.

In order to solve the above problem, a rotary seal includes: a stainless steel-made slinger including a cylindrical sleeve, and a flange extending radially outward from one end in an axial direction of the sleeve; a core metal including a core metal cylinder that is cylindrical and a core metal flange extending radially inward from one end in an axial direction of the core metal cylinder; and a seal member including a base portion joined to the core metal and a seal lip portion extending from the base portion. The rotary seal is used in a state where the sleeve is attached to a steel-made radially inner member and the core metal cylinder is attached to a steel-made radially outer member, and a plated coating of metal having a higher ionization tendency than iron is provided on at least either one of: (i) a metal fitting portion between the sleeve and the radially inner member; and (ii) an outside air side surface of the slinger, the outside air side surface including an outside air side end portion of the metal fitting portion. (claim 1).

Here, it is also a preferable aspect that the core metal is made of stainless steel, and the plated coating of metal having a higher ionization tendency than iron is provided on at least either one of: (i) a metal fitting portion between the core metal cylinder and the radially outer member; and (ii) an outside air side surface of the core metal, the outside air side surface including the outside air side end portion of the metal fitting portion (claim 2).

Moreover, in order to solve the above problem, a rotary seal includes: a stainless steel-made core metal including a core metal cylinder that is cylindrical and a core metal flange extending radially inward or outward from one end in an axial direction of the core metal cylinder; and a seal member including a base portion joined to the core metal and a seal lip portion extending from the base portion. The rotary seal is used in a state where the core metal cylinder is attached to a steel-made radially outer member or a steel-made radially inner member, and a plated coating of metal having a higher ionization tendency than iron is provided on at least either one of: (i) a metal fitting portion between the core metal cylinder and the radially outward member or the radially inner member; and (ii) an outside air side surface of the core metal, the outside air side surface including an outside air side end portion of the metal fitting portion, (claim 3)

Here, in the invention according to any one of claims 1 to 3, it is also a preferable aspect that the metal having a higher ionization tendency than iron is zinc, aluminum or magnesium, and the plated coating contains one kind or a plurality of kinds of zinc, aluminum and magnesium. (claim 4)

In accordance with the configuration of the rotary seal as described above, in the rotary seal attached to the radially inner member and the radially outer member or the rotary seal attached to either one of the radially inner member and the radially outer member, the plated coating of metal having a higher ionization tendency than iron is provided on at least either one of: (i) the metal fitting portion between the stainless steel-made member and the steel-made member; and (ii) the slinger including the outside air side end portion of the fitting portion or the outside air side surface of the core metal.

When the metal fitting portion is provided with the plated coating of metal having a higher ionization tendency than iron, then the plated coating of the metal having a higher ionization tendency than iron is present in the fitting portion between the steel-made member having a higher ionization tendency and the stainless steel-made member having a smaller ionization tendency. As a result, even when the solution containing the electrolyte is present on the outside air side of the metal fitting portion, the plated coating corrodes first instead of the steel-made member, and therefore, the progress of the corrosion of the steel-made member can be delayed.

When the slinger including the outside air side end portion of the metal fitting portion or the outside air side surface of the core metal is provided with the plated coating of the metal having a higher ionization tendency than iron, then the plated coating of the metal having a higher ionization tendency than iron is present near the outside air side end portion of the fitting portion between the steel-made member having a higher ionization tendency than iron and the stainless steel-made member having a smaller ionization tendency. As a result, even when the solution containing the electrolyte is present on the outside air side of the metal fitting portion, the plated coating corrodes first instead of the steel-made member, and therefore, the progress of the corrosion of the steel-made member can be delayed.

Therefore, an occurrence of a defect that the corrosion of the steel-made member progresses to lower the air tightness of the metal fitting portion can be suppressed, whereby reduction in the life of the bearing device or the like, to which the rotary seal is attached, can be suppressed.

In addition, the plated coating is provided on the metal fitting portion, whereby the above-described functions and effects are exerted by a remaining portion of the plated coating even if a part thereof is peeled off. Accordingly, there is no reduction in durability and reliability due to chipping or the like unlike such a rotary seal as described in Patent Literature 1, which is integrally formed with the elastic seal member described above.

Furthermore, the metal-plated coating having a higher ionization tendency than iron and provided on at least either one of (i) the metal fitting portion between the stainless steel-made member and the steel-made member and (ii) the slinger including the outside air side end portion of the fitting portion or the outside air side surface of the core metal can be easily formed by hot dip galvanizing in which the slinger or the core metal is immersed in the molten metal for a certain period of time or by electroplating in which the slinger or the core metal is used as a cathode and energized in an electrolytic solution containing ions of the metal.

As described above, the rotary seal according to the present invention mainly produces the following effects.
(1) Even when the solution containing the electrolyte is present on the outside air side of the metal fitting portion between the stainless steel-made member and the steel-made member, the plated coating of the metal having a higher ionization tendency than iron corrodes first instead of the steel-made member, and therefore, the progress of the corrosion of the steel-made member can be delayed.
(2) The occurrence of the defect that the corrosion of the steel-made member progresses to lower the air tightness of the metal fitting portion as described above can be suppressed, whereby the reduction in the life of the bearing device or the like, to which the rotary seal is attached, can be suppressed.
(3) The plated coating is provided on the metal fitting portion, whereby the above-described functions and effects are exerted by a remaining portion of the plated coating even if a part thereof is peeled off. Accordingly, there is no reduction in durability and reliability due to chipping or the like unlike the rotary seal in Patent Literature 1.
(4) The plated coating of the metal having a higher ionization tendency than iron can be easily formed by the hot dip galvanizing or the electroplating.

### BRIEF DESCRIPTION OF THE DRAWINGS

FIG. 1 is a partial longitudinal cross-sectional schematic view showing an example in which a rotary seal according to an embodiment of the present invention is used for a bearing device for supporting a wheel of an automobile;
FIG. 2 is an enlarged longitudinal cross-sectional view of a main part of an inward rotary seal;
FIG. 3 is an enlarged longitudinal cross-sectional view of a main part of an outward rotary seal;
FIG. 4 is an enlarged longitudinal cross-sectional view of a main part of a test fixture;
FIG. 5 is an end view of a cut section taken along a plane including an axial direction, showing an example in which a plated coating is provided on an entire surface of a slinger;
FIG. 6 is an end view of a cut section taken along the plane including the axial direction, showing an example in which the plated coating is provided on a part of the surface of the slinger;
FIG. 7 is an end view of the cut portion, showing another example of an application range of the plating film;
FIG. 8 is an end view of the cut portion, showing still another example of the application range;
FIG. 9 is an end view of the cut portion, showing yet another example of the application range; and
FIG. 10 is an end view of the cut portion, showing a further example of the application range.

### DETAILED DESCRIPTION OF PREFERRED EMBODIMENT

Next, an embodiment of the present invention will be described in detail with reference to the accompanying drawings; however, the present invention is not limited to the embodiment shown in the accompanying drawings and includes all the embodiments satisfying requirements described in the claims.

Note that, in the present description, when a rotary seal is attached, a direction of a rotation axis of a radially inner member that is a rotating-side member will be referred to as "axial direction", and a direction orthogonal to the axial direction will be referred to as "radial direction".

A direction from a vehicle body of an automobile toward a wheel will be referred to as "outward", and a direction opposite thereto will be referred to as "inward".

### <Structure Example of Bearing Device Using Rotary Seal>

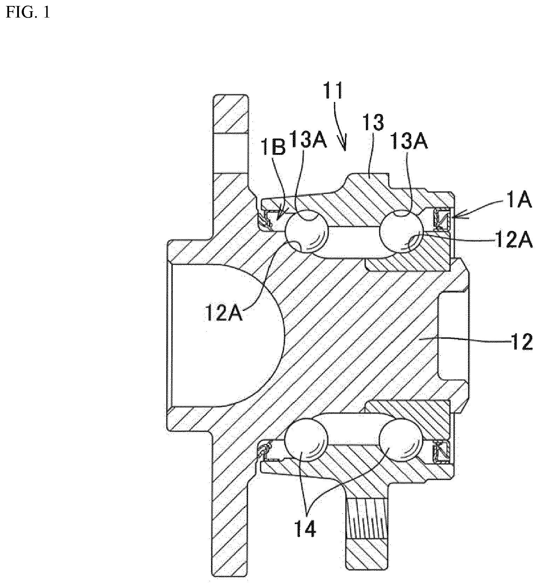

A partial longitudinal cross-sectional schematic view in FIG. 1 shows an example in which rotary seals 1A and 1B according to the embodiment of the present invention are used for a bearing device 11 for supporting a wheel of an automobile.

The bearing device 11 includes: a bearing having: an inner ring 12 in which an inner ring raceway surface 12A is formed on an outer circumferential surface, the inner ring 12 rotating together with the wheel; an outer ring 13 in which an outer raceway surface 13A is formed on an inner circumferential surface, the outer ring 13 being integral with a vehicle body; balls 14, 14, ... which are rolling elements rolling between the inner ring raceway surface 12A and the outer ring raceway surface 13A; and the like.

Moreover, the bearing device 11 includes the rotary seals 1A and 1B, which prevent penetration of muddy water or the like and leakage of lubricating grease, on inward and outward end portions (inward of the inward balls 14, ... and outward of the outward balls 14, ...) between the inner ring 12 and the outer ring 13.

### <Structure Example of Rotary Seal>

### (Inward rotary seal)

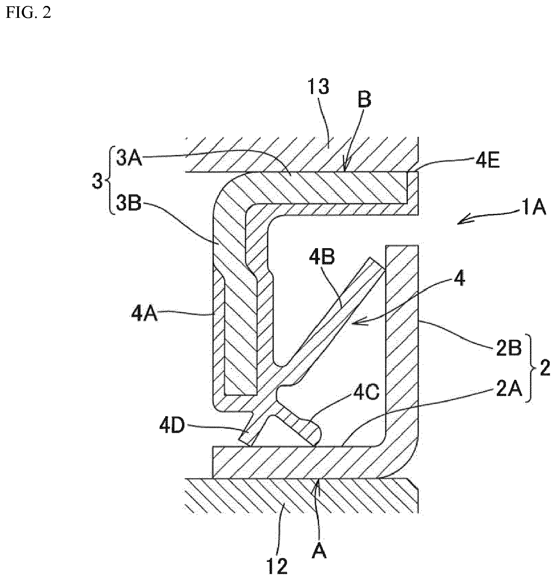

As shown in an enlarged longitudinal cross-sectional view of a main part in FIG. 2, the inward rotary seal 1A according to the embodiment of the present invention includes: a slinger 2 made of a stainless-steel plate by presswork; a core metal 3 made of a stainless-steel plate by presswork; and a seal member 4 that is an elastic body such as rubber and is integrated with the core metal 3.

The slinger 2 includes a cylindrical sleeve 2A and a flange 2B extending radially outward from one end in an axial direction of the sleeve 2A, and the stainless steel-made sleeve 2A is attached to the inner ring 12 that is a steel-made radially inner member.

The core metal 3 includes a core metal cylinder 3A that is cylindrical and a core metal flange 3B extending radially inward from one end in an axial direction of the core metal cylinder 3A, and the stainless steel-made core metal cylinder 3A is attached to the outer ring 13 that is a steel-made radially outer member.

The seal member 4 includes a base portion 4A joined to the core metal 3 and seal lip portions 4B, 4C and 4D extending from the base portion 4A, a tip end of the seal lip portion 4B is brought into sliding contact with an inner surface of the flange 2B of the slinger 2, and tip ends of the seal lip portions 4C and 4D are brought into sliding contact with an outer circumferential surface of the sleeve 2A of the slinger 2. Moreover, the base portion 4A has an outer circumferential seal portion 4E extending outward in a circumferential direction so as to cover the core metal cylinder 3A.

The core metal cylinder 3A of the stainless steel-made core metal 3 is pressed into the outer ring 13 that is a steel-made radially outer member, whereby the core metal 3 and the seal member 4 are fixed to the outer ring 13.

Here, a metal fitting portion B of the core metal 3 and the outer ring 13 is sealed by the outer circumferential seal portion 4E.

The sleeve 2A of the stainless steel-made slinger 2 is pressed into the inner ring 12 that is a steel-made radially inner member, whereby the slinger 2 is fixed to the inner ring 12.

A metal fitting portion A of the slinger 2 and the inner ring 12 is provided with a galvanized coating.

Metal of the plated coating provided in the fitting portion A is not limited to zinc but may be metal having a higher ionization tendency than iron. Therefore, the metal may be aluminum or magnesium.

Then, the metal having a higher ionization tendency than iron may be one kind of zinc, aluminum, magnesium or the like, or may be a plurality of kinds thereof.

In a configuration in which the metal fitting portion B of the core metal 3 and the outer ring 13 is not sealed by the outer circumferential seal portion 4E, it is preferable to provide the galvanized coating on the metal fitting portion B.

In the structural example of the inward rotary seal 1A, the slinger 2 has a single structure, but a magnetic encoder (resin magnet or rubber magnet) may be joined to the slinger 2.

### (Outward rotary seal)

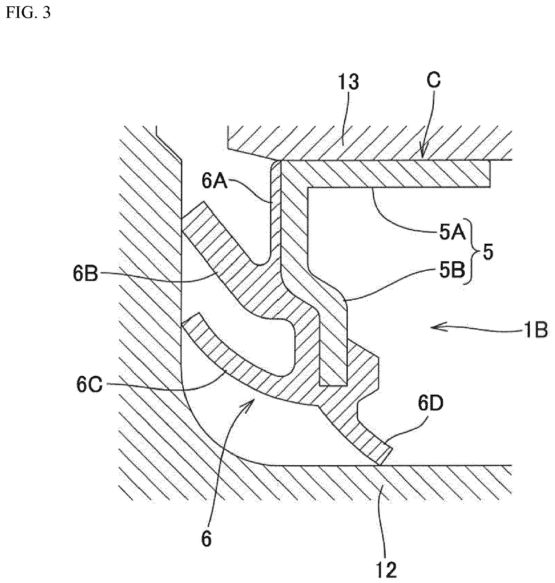

As shown in an enlarged longitudinal cross-sectional view of a main part in FIG. 3, the outward rotary seal 1B according to the embodiment of the present invention includes: a core metal 5 made of a stainless-steel plate by presswork; and a seal member 6 that is an elastic body such as rubber and is integrated with the core metal 5.

The core metal 5 includes a core metal cylinder 5A that is cylindrical and a core metal flange 5B extending radially inward from one end in an axial direction of the core metal cylinder 5A, and the stainless steel-made core metal cylinder 5A is attached to the outer ring 13 that is a steel-made radially outer member.

The seal member 6 includes a base portion 6A joined to the core metal 5 and seal lip portions 6B, 6C and 6D extending from the base portion 6A, tip ends of the seal lip portions 6B and 6C are brought into sliding contact with an inner surface of an outward flange of the inner ring 12, and a tip end of the seal lip portion 6D is brought into sliding contact with an outer circumferential surface of the inner ring 12.

The core metal cylinder 5A of the stainless steel-made core metal 5 is pressed into the outer ring 13 that is a steel-made radially outer member, whereby the core metal 5 and the seal member 6 are fixed to the outer ring 13.

A metal fitting portion C of the core metal 5 and the outer ring 13 is provided with a galvanized coating.

Note that such a configuration may be adopted, in which the core metal cylinder 5A of the core metal 5 is attached to the inner ring 12, the core metal flange 5B is made to extend outward in the radial direction from one end in the axial direction of the core metal cylinder 5A, and the core metal 5 and the outer ring 13 are sealed by a seal lip portion. In that case, a metal fitting portion between the core metal cylinder 5A and the inner ring 12 is provided with a galvanized coating.

### <Method for Providing Galvanized Coating on Fitting Portion Between Metals>

Methods for providing the galvanized coatings on the metal fitting portions A and B shown in FIG. 2 and a method for providing the metal fitting portion C shown in FIG. 3 are the same. Therefore, the method for providing the galvanized coating on the metal fitting portion A shown in FIG. 2 will be described as a representative.

A zinc film can be formed on the entire surface of the slinger 2 by hot dip galvanizing in which the slinger 2 is immersed in molten zinc for a certain period of time or by electroplating in which the slinger 2 is used as a cathode and energized in an electrolytic solution containing zinc ions, whereby a galvanized coating can be formed.

Therefore, the galvanized coating can be easily provided on the fitting portion A.

In the case of not forming the zinc films on the entire surfaces of the slinger 2 and the core metal 3 shown in FIG. 2 and on the core metal 5 shown in FIG. 3, the plating is performed while masking a range where the plated coating is not provided.

By the method as described above, a plated coating of metal such as a galvanized coating having a higher ionization tendency than iron is provided on the metal fitting portion between the stainless steel-made member and the steel-made member. As a result, the plated coating is present on the fitting portion between the iron-made member having a higher ionization tendency and the stainless steel-made member having a lower ionization tendency. Accordingly, even if a solution containing the electrolyte is present on the outside air side of the metal fitting portion, the plated coating first corrodes in place of the steel-made member, and accordingly, the progress of the corrosion of the steel-made member can be delayed.

Therefore, an occurrence of a defect that the corrosion of the steel-made member progresses to lower the air tightness of the metal fitting portion as above can be suppressed, whereby reduction in the life of the bearing device or the like, to which the rotary seal is attached, can be suppressed.

In addition, the plated coating is provided on the metal fitting portion, whereby the above-described functions and effects are exerted by a remaining portion of the plated coating even if a part thereof is peeled off. Accordingly, there is no reduction in durability and reliability due to chipping or the like unlike such a rotary seal as described in Patent Literature 1, which is integrally formed with an elastic seal member which is an elastic annular seal portion obtained by applying and curing an elastomer agent.

Furthermore, such a metal-plated coating provided on the metal fitting portion and having a higher ionization tendency than iron can be easily formed by the hot dip galvanizing in which the slinger or the core metal is immersed in the molten metal for a certain period of time or by the electroplating in which the slinger or the core metal is used as a cathode and energized in an electrolytic solution containing ions of the metal.

### <Effect Checking Test>

Next, a test performed for confirming an effect of the rotary seal of the present invention will be described.

### (Test fixture)

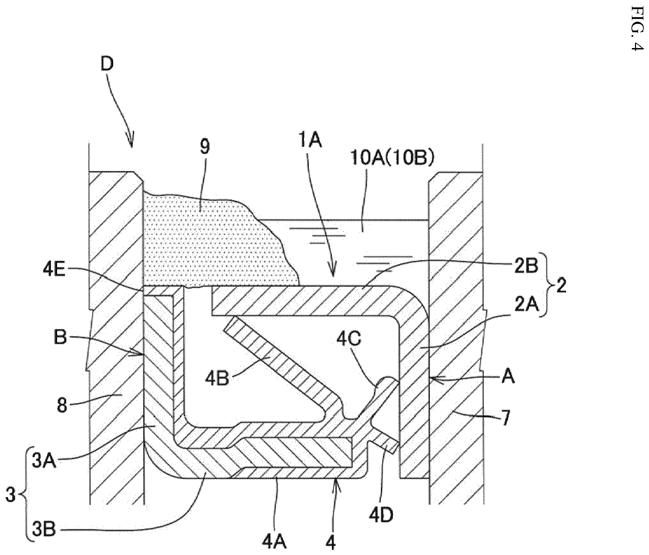

A test was carried out using a test fixture D shown in an enlarged longitudinal cross-sectional view of a main part in FIG. 4 in order to evaluate a degree of the corrosion of the steel-made member when a solution containing an electrolyte is present around a metal contact portion between the stainless steel-made member and the steel-made member.

As shown in FIG. 4, the test fixture D has a structure in which a rotary seal 1A is set between a dummy inner ring 7 and a dummy outer ring 8, in which axial directions are vertical, and a gap between the slinger 2 and the core metal 3 is filled with a liquid gasket 9.

Here, the dummy inner ring 7 is a member made of steel (S45C), and the slinger 2 is a member made of stainless steel (SUS430).

### (Example and comparative example)

Regarding the slinger 2 which is a member made of the stainless steel (SUS430) placed in the test fixture D of FIG. 4, taken as an example is a slinger 2 having a galvanized coating on the entire surface in order to provide such a galvanized coating on the fitting portion A where the slinger 2 is fitted to the dummy inner ring 7.

Regarding the slinger 2 which is such a member made of the stainless steel (SUS430) placed in the test fixture D in FIG. 4, a slinger 2 that is not provided with the galvanized coating is taken as a comparative example.

### (Test method)

For each of the test fixtures D of the embodiment and the comparative example, on the first day, a series of operations in the following "Test Cycle on Day 1" was performed, and from the second day to the seventh day, a series of operations in the following "Test cycle from Day 2 and After" is performed.

After the operations were performed during the seven days, the slinger 2 was removed from the dummy inner ring 7, and whether rust occurred on the fitting portion of the slinger 2 in the dummy inner ring 7 was observed.

### (Test cycle on day 1)

(1) Salt water 10A having a salinity concentration of 5% by weight was poured on the outside air side surface (upper surface) of the slinger 2 in FIG. 4.
(2) The test fixture D was placed in an oven A at 40°C in a humid atmosphere/ozone atmosphere (about 1 hour).
(3) The test fixture D was taken out from the oven A, was placed in an oven B at 80°C, and moisture was evaporated (about 1 hour).
(4) The test fixture D was taken out from the oven B and cooled indoors to room temperature (23°C).
(5) Water 10B was poured on the outside air side surface (upper surface) of the slinger 2 in FIG. 4.
(6) The test fixture D was placed in the oven A at 40°C in the humid atmosphere/ozone atmosphere (about 1 hour).
(7) The test fixture D was taken out from the oven A, was placed in oven B at 80°C, and moisture was evaporated (about 1 hour).
(8) The test fixture D was taken out from the oven B and cooled indoors to room temperature (23°C).
(9) The water 10B was poured on the outside air side surface (upper surface) of the slinger 2 in FIG. 4.
(10) The test fixture D was placed in the oven A at 40°C in the humid atmosphere/ozone atmosphere.

### (Test cycle on day 2 and after)

(1) The test fixture D was taken out from the oven A and cooled indoors to the room temperature.
(2) The water 10B was poured on the outside air side surface (upper surface) of the slinger 2 in FIG. 4.
(3) The test fixture D was placed in the oven A at 40°C in the humid atmosphere/ozone atmosphere (about 1 hour), whereby rust was allowed to grow.
(4) The test fixture D was taken out from the oven A, was placed in the oven B at 80°C, and moisture was evaporated (about 1 hour).
(5) The test fixture D was taken out from the oven B and cooled indoors to the room temperature (23°C).
(6) The water 10B was poured on the outside air side surface (upper surface) of the slinger 2 in FIG. 4.
(7) The test fixture D was placed in the oven A at 40°C in the humid atmosphere/ozone atmosphere (about 1 hour).
(8) The test fixture D was taken out from the oven A, was placed in the oven B at 80°C, and moisture was evaporated (about 1 hour).
(9) The test fixture D was taken out from the oven B and cooled indoors to the room temperature (23°C).
(10) The water 10B was poured on the outside air side surface (upper surface) of the slinger 2 in FIG. 4.
(11) The test fixture D was placed in the oven A at 40°C in the humid atmosphere/ozone atmosphere.

In the test cycle, the "humid atmosphere" means an atmosphere in which a stainless-steel tray containing water is placed in the oven, and the "ozone atmosphere" means an atmosphere in which an ozone generator is placed in the oven and operated.

### (Test results)

In the test fixture D in the comparative example (without the galvanized coating) after being subjected to the operations in the "test cycle of day 1" and the "test cycle on day 2 and after" during 7 days in total, the slinger 2 was removed from the dummy inner ring 7, and whether rust occurred on the fitting portion A (FIG. 4) of the slinger 2 in the dummy inner ring 7 was observed. As a result, the occurrence of rust was observed in the fitting portion A of the slinger 2 in the dummy inner ring 7.

In contrast, in the test fixture D in the example (with the galvanized coating) after being subjected to the operations during 7 days in total, the slinger 2 was removed from the dummy inner ring 7, and whether rust occurred on the fitting portion A (FIG. 4) of the slinger 2 in the dummy inner ring 7 was observed. As a result, in the example (with the galvanized coating), rust did not occur in the fitting portion A of the slinger 2 in the dummy inner ring 7.

The reason for the above is considered to be as follows. That is, when a solution containing an electrolyte is present around the contact portion between the stainless steel-made member and the steel-made member, the steel-made member having a higher ionization tendency becomes a negative electrode (anode), and the galvanized coating first corrodes instead of the steel-made member so as to inhibit the steel-made member from ionizing and melting out into the solution.

### <Examples of range where plated coating is provided>

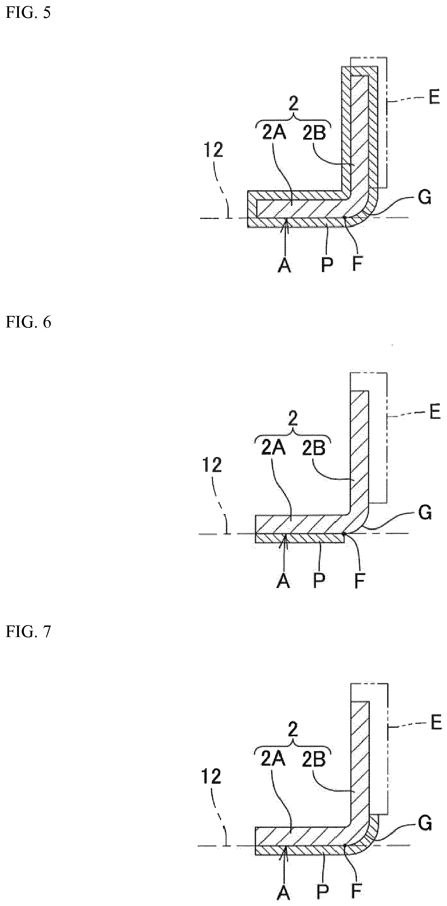

End views of cut portions shown in FIGS. 5 to 10 show examples of a range in which the plated coating P of the metal having a higher ionization tendency than iron is provided, in which a thickness of the plated coating P is exaggeratedly shown.

FIG. 5 shows an example in which the plated coating P is provided on the entire surface of the slinger 2, and FIGS. 6 to 10 are end views of cut portions, each of which is cut along a plane including an axial direction, showing an example in which the plated coating P is provided on part of the surface of the slinger.

A range where the plated coating P is not provided is masked and prevented from being subjected to the plating.

Note that, in the slinger 2 of the rotary seal, there are cases where a magnetic encoder E is joined to the flange 2B and where the magnetic encoder E is not present.

FIG. 6 shows an example in which the plated coating P is provided only on the metal fitting portion A, and FIG. 7 shows an example in which the plated coating P is provided on the metal fitting portion A and an outside air side surface G (for example, up to an inner circumferential surface of the magnetic encoder E) of the slinger 2, the outside air side surface G including an outside air side end portion F of the fitting portion A.

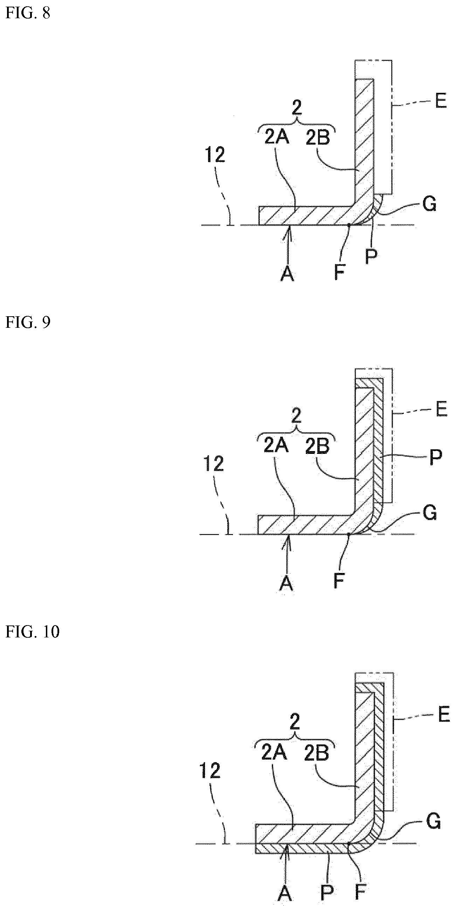

FIGS. 8 and 9 show examples in each of which the plated coating P is not provided on the metal fitting portion A. FIG. 8 shows an example in which the plated coating P is provided on the outside air side surface G (for example, up to the inner circumferential surface of the magnetic encoder E) of the slinger 2, the outside air side surface G including the outside air side end portion F of the fitting portion A, and FIG. 9 shows an example in which the plated coating P is further provided up to the outer circumferential surface of the flange 2B in addition to FIG. 8.

Note that, in each of such examples as shown in FIGS. 8 and 9, the plated coating P may be applied to the fitting portion A.

In such examples as shown in FIGS. 8 and 9, since the plated coating P of the metal having a higher ionization tendency than iron in each of FIGS. 8 and 9 corrodes first, the rust to be generated in the steel-made bearing member can be guided to the outside of the bearing, and the progress of the rust to the inside of the bearing can be delayed.

FIG. 10 shows an example in which the plated coating P is provided within a range obtained by combining the range where the plated coating P is provided in FIG. 6 and the range where the plated coating P is provided in FIG. 9.

Even when the plated coating P is not provided on the metal fitting portion A as shown in each of FIGS. 8 and 9, the plated coating P of the metal having a higher ionization tendency than iron is provided on the outside air side surface G of the slinger 2, the outside air side surface G including the outside air side end portion F of the fitting portion A.

Therefore, when the solution containing the electrolyte is present on the outside air side of the metal fitting portion A, the plated coating P of the metal having a higher ionization tendency than iron corrodes first instead of the steel-made member (inner ring 12), and therefore, the progress of the corrosion of the steel-made member (inner ring 12) can be delayed.

The rotary seal of the present invention just needs to include the plated coating P of the metal having a higher ionization tendency than iron on at least either one of: (i) the metal fitting portion between the stainless steel-made member and the steel-made member; and (ii) the slinger including the outside air side end portion of the fitting portion or the outside air side surface of the core metal. It is a more preferred embodiment of the rotary seal of the present invention that the plated coating P is provided on both of: the above-described (i) and the above-described (ii).

## Claims

1. A rotary seal comprising:
a stainless steel-made slinger including a cylindrical sleeve, and a flange extending radially outward from one end in an axial direction of the sleeve;
a core metal including a core metal cylinder that is cylindrical and a core metal flange extending radially inward from one end in an axial direction of the core metal cylinder; and
a seal member including a base portion joined to the core metal and a seal lip portion extending from the base portion,
wherein the rotary seal is used in a state where the sleeve is attached to a steel-made radially inner member and the core metal cylinder is attached to a steel-made radially outer member, and
a plated coating of metal having a higher ionization tendency than iron is provided on at least either one of:
(i) a metal fitting portion between the sleeve and the radially inner member; and
(ii) an outside air side surface of the slinger, the outside air side surface including an outside air side end portion of the metal fitting portion.

2. The rotary seal according to claim 1, wherein
the core metal is made of stainless steel, and
the plated coating of metal having a higher ionization tendency than iron is provided on at least either one of:
(i) a metal fitting portion between the core metal cylinder and the radially outer member; and
(ii) an outside air side surface of the core metal, the outside air side surface including the outside air side end portion of the metal fitting portion.

3. A rotary seal comprising:
a stainless steel-made core metal including a core metal cylinder that is cylindrical and a core metal flange extending radially inward or outward from one end in an axial direction of the core metal cylinder; and
a seal member including a base portion joined to the core metal and a seal lip portion extending from the base portion,
wherein the rotary seal is used in a state where the core metal cylinder is attached to a steel-made radially outer member or a steel-made radially inner member, and
a plated coating of metal having a higher ionization tendency than iron is provided on at least either one of:
(i) a metal fitting portion between the core metal cylinder and the radially outward member or the radially inner member; and
(ii) an outside air side surface of the core metal, the outside air side surface including an outside air side end portion of the metal fitting portion.

4. The rotary seal according to any one of claims 1 to 3, wherein
the metal having a higher ionization tendency than iron is zinc, aluminum or magnesium, and
the plated coating contains one kind or a plurality of kinds of zinc, aluminum and magnesium.
